## Europäisches Patentamt

## European Patent Office

## Office européen des brevets

(19)

(11) Veröffentlichungsnummer: **0 086 383**
A2

(12) # EUROPÄISCHE PATENTANMELDUNG

(21) Anmeldenummer: **83100852.9**

(22) Anmeldetag: **31.01.83**

(51) Int. Cl.³: **F 24 J 3/04**, F 25 B 17/08,
F 25 B 49/00, F 25 B 35/04

---

(30) Priorität: **15.02.82 DE 3205285**
**03.03.82 DE 3207656**

(43) Veröffentlichungstag der Anmeldung: **24.08.83**
**Patentblatt 83/34**

(84) Benannte Vertragsstaaten: **AT CH DE FR GB IT LI SE**

(71) Anmelder: **Hieronimi, Ulrich, Pienzenauerstrasse 1,
D-8000 München 80 (DE)**

(72) Erfinder: **Maier-Laxhuber, Peter, Maloja-Weg 9,
D-8000 München 71 (DE)**

(74) Vertreter: **Heldrich, Udo, Patentanwalt & Rechtsanwalt
Dipl.-Phys. Dr. jur. U. Heldrich Franziskanerstrasse 30,
D-8000 München 80 (DE)**

---

(54) **Sorptionsapparate und Verfahren für ihren Betrieb.**

(57) Ein Sorptionsapparat ist mit einem Wärmeabgabe-Regler 41 versehen, der vom Wärmeverbraucher 50 betätigbar ist, um den Sorptionsapparat als Wärmepumpe und Wärmespeicher simultan einsetzbar zu machen.

ACTORUM AG

PATENTANWALT· & RECHTSANWALT

DIPL.-PHYS. DR. JUR. U. HEIDRICH

*ZUGELASSEN BEIM EUROPÄISCHEN PATENTAMT
EUROPEAN PATENT ATTORNEY

Franziskanerstr. 30
D-8000 MÜNCHEN 80

Tel. (089) 448 50 40
Telex 5 213 710 epto d

0086383

31. Jan. 1983

## SORPTIONSAPPARATE UND VERFAHREN FÜR IHREN BETRIEB

Die Erfindung betrifft Sorptionsapparate nach dem Oberbegriff der Patentansprüche 1 bzw. 22 und Verfahren für ihren Betrieb.

Die thermodynamischen Grundlagen der Sorptionsapparate sind bereits seit dem letzten Jahrhundert bekannt. Die Entwicklung führte von den einfachsten periodischen (absatzweise betriebenen) Kälteapparaten zu den heute noch gebauten kontinuierlichen Absorberkühlschränken.

Die Entdeckung der fluorierten Kohlenwasserstoffe und die dadurch bedingten Verbesserungen in der Kompressorentechnik ermöglichten jedoch nach dem 2. Weltkrieg den Bau von Kompressionskältemaschinen, die die periodischen Kälteapparate völlig und die kontinuierlich betreibbaren bis auf wenige Anwendungsmöglichkeiten, z. B. Camping-Kühlschränke oder Kaltwassersätze, verdrängten.

Die durch die Energiekrise 1973/74 ausgelösten Energiepreissteigerungen führten zum Einsatz elektrisch angetriebener Kompressionskältemaschinen in Heizsystemen nach dem Vorbild der Haushaltskühlschränke. Da der Gesamtwirkungsgrad derartiger Heizsysteme unter Einbeziehung des Kraftwerkwirkungsgrads

0086383

gegenüber verbesserten, konventionellen Heizsystemen nur in Einzelfällen höher liegt, griff man erneut das Konzept der kontinuierlich, direkt mit Primärenergie (Öl, Gas, Kohle) angetriebenen Sorptionsapparate auf.

Der Vorteil dieser kontinuierlichen Sorptionsapparate liegt in der Erhöhung der Gesamtleistungsziffer auf Werte bis zu 1,3, die durch Vermeiden der Energieverluste im Kraftwerk erreichbar sind.

Da beide Systeme, Kompressionskältemaschinen und kontinuierliche Sorptionsapparate, ursprünglich zur kontinuierlichen Kälteerzeugung konstruiert waren, erwiesen sie sich beim Einsatz in Heizsystemen gleich in mehrfacher Hinsicht als ungeeignet.

Grundsätzlich unterscheiden sich Wärmepumpen von Kühlmaschinen bzw. Sorptionskühlapparaten auf dem Anwendungsgebiet. Von Kälteerzeugern fordert man eine ununterbrochene Kühlwirkung auf möglichst konstantem Kühlniveau. Da die Abwärme nur in den seltensten Fällen genutzt wird, ist deren Menge und Temperatur nicht von Interesse.

Ganz im Gegensatz zu Wärmepumpen: hier wird die Abwärme zur Nutzwärme. Diese soll bei kaltem Wetter auf einem höheren Nutztemperaturniveau und in verstärktem Maße verfügbar sein. Aber gerade zu diesem Zeitpunkt ist die Wärmequellentemperatur - bei Kältemaschinen war dies die Kühltemperatur - besonders niedrig. Nutztemperatur und Wärmequellentemperatur liegen also gerade bei hohem Nutzwärmebedarf weit auseinander. Beide sind zudem unabhängig voneinander extremen Schwankungen, die sowohl von der Witterung als auch von den Verbrauchergewohnheiten abhängen, unterworfen. Somit besteht meist bei ausreichendem Wärmeangebot aus der Wärmequelle kein Be-

0086383

darf an Nutzwärme, während bei erhöhtem Nutzwärmebedarf die Wärmequelle versiegt.

Die Leistungsziffer kontinuierlicher Maschinen und Apparate sinkt unter diesen Betriebsbedingungen drastisch ab. Dies wiederum führt zu einer geringeren Nutzwärmeleistung, die durch Installation zusätzlicher Wärmespeicher und/oder Umschalten auf ein weiteres Heizsystem ausgeglichen werden muß.

Die Nutzwärmetemperaturen aller bisher angesetzten Wärmepumpensysteme sind, bedingt durch die niedrigen Wärmequellentemperaturen bei noch wirtschaftlichen Leistungsziffern, auf Werte unterhalb 60 °C beschränkt.

Diese Einschränkung fordert den Einsatz von Niedertemperaturheizsystemen, wie sie nur in Neubauten kostengünstig installiert werden können. Altbauten und Sanierungsobjekte sind dem Wärmepumpeneinsatz bisher nur in Ausnahmefällen zugänglich.

Alle heute auf dem Markt befindlichen Sorptionswärmepumpen sind kontinuierliche Apparate, die mit dem giftigen und brennbaren Stoffpaar Ammoniak/Wasser gefüllt sind. Rechtsvorschriftliche Ammoniak-Höchstmengen bedingen bestimmte, für den Wärmepumpeneinsatz ungünstige Schaltungen. Andere, aus der Sorptionskältetechnik her bekannte, ungefährlichere Stoffpaare erweisen sich für den Wärmepumpenprozeß als wenig effizient.

Berücksichtigt man noch den Energieaufwand für die verschleißanfälligen Lösungsmittelpumpen, so liegen die mit diesen Apparaten erzielten Leistungsziffern nach Herstellerangaben bei 1,3. Im praktischen Einsatz, bei tiefen Wärmequellentemperaturen, schwankendem Nutzwärmebedarf oder gar im Taktbetrieb sind diese Leistungsziffern nicht erreichbar.

Zudem sind derartige Apparate für eine mittlere Nutzwärmeleistung ausgelegt, die bei höherem Nutzwärmebedarf eine Zusatzheizung erfordern. Dies bedeutet doppelte Investition und Stellfläche, da die Zusatzeinrichtung für den maximalen Nutzwärmebedarf ausgelegt sein muß.

Um das Angebot von Wärme aus der Wärmequelle auf der einen Seite und dem Nutzwärmebedarf auf der anderen, zusammen mit einem zeitlich günstigen Primärenergieeinsatz, besser nutzen zu können, schlägt die DE-OS 25 23 429 vor, Wärme aus der Wärmequelle in einer Speichermasse zu speichern, um sie dann durch eine elektrisch betriebene Kompressorwärmepumpe, unter Verwendung verbilligten Nachtstroms, auf einen Nutzwärmespeicher anzuheben. Derartige Vorschläge scheitern im allgemeinen an der Speichergröße, da bei den niedrigen Nutzwärmetemperaturen, neben der erforderlichen Grädigkeit in den Wärmetauschern des Speichers kaum noch eine effektive Temperaturspreizung der Speichermasse möglich ist.

Einen seit Jahrzehnten bewährten Wärmespeicher stellt der mittels Niedertarifstrom betriebene "Nachtstromwärmespeicher" dar. In Schwachlastzeiten wird hierbei eine Speichermasse auf Temperaturen über 600 °C erhitzt. Der Nutzwärmebedarf wird außerhalb der Niedertarifzeit aus der spezifischen Wärme der Speichermasse gedeckt. Die hohen Speichertemperaturen führen trotz verstärkter Isolation zu hohen Wärmeverlusten. Ein Wärmepumpeffekt ist dabei nicht möglich.

Die EP-OS 00 262 557 beschreibt einen absatzweise arbeitenden Sorptionsspeicher mit dem Ziel, die Antriebsenergie für eine Wärmepumpe bei ausreichend hohen Temperaturen zu speichern. Jedoch bleibt der Aufbau des Sorptionsspeichers offen, eine Speicherung der Wärme aus einer Wärmequelle ist nicht vorgesehen. Für einen "quasi-kontinuierlichen Betrieb" werden aufwendigerweise zwei Sorptionsspeicher benötigt.

Alle bekannten Kälteapparate haben den Zweck, möglichst ohne äußeren Eingriff eine konstante Temperatur im Kühlraum zu erhalten. Aber auch bei Anlagen, die die Abwärme aus Kondensator und Kocheradsorber nutzen sollen, ist die Kühltemperatur-Regelung auf die optimale Kälteerzeugung ausgelegt.

Die DE-PS 596 308 beschreibt eine Vorrichtung zur Erzeugung von Warmwasser durch Kondensation bzw. Absorption in einem absatzweise wirkenden Absorptionskälteapparat. Eine Thermostatsteuerung läßt hier jedoch warmes Wasser ungenutzt ablaufen, um die Kühlwirkung nicht zu beeinträchtigen.

Der Erfindung liegt die Aufgabe zugrunde, Sorptionsapparate so zu gestalten und Verfahren zu ihrem Betrieb anzugeben, daß sie als Wärmepumpe und Wärmespeicher simultan einsetzbar sind. Wärme aus einer Wärmequelle soll durch den Wärmepumpeffekt auf Nutzwärmetemperatur angehoben und zusammen mit der zum Antrieb nötigen Desorptionswärme speicherbar sein. Die Abgabe von Nutzwärme soll dabei völlig unabhängig von den Betriebsphasen des Sorptionsapparats regelbar sein.

Die Lösung dieser Aufgabe erfolgt erfindungsgemäß alternativ oder kumulativ durch die Lehre der Ansprüche 1, 22, 37 ff.

Nach der Lehre der Ansprüche 1 - 4 ist es möglich, daß der Wärmeabgabe-Regler in Heizsystemen die Funktion konventioneller Heizungsregler übernimmt und die häufig eingesetzen Mischereinrichtungen entfallen können. Dies bringt eine zusätzliche Vereinfachung und eine Verbilligung der Installation.

Die Lehre nach dem Anspruch 6 vereinfacht den Regelaufwand auf ein Minimum. Beim Ansteigen der Sorptionsmitteltemperatur durch Sorption, oder in der Desorptionsphase durch Erhitzen, bzw. bei reduziertem Nutzwärmebedarf sinkt die Flüssigkeitssäule des Wärmeträgermediums durch einen Druckanstieg in der Wärmetauschereinrichtung ab, oder verschwindet ganz. Die Kondensatortemperatur sinkt daraufhin, da weniger Arbeitsmitteldampf in den Kondensator strömt. Bei erneuter oder erhöhter Wärmeabgabe an den Verbraucher sinkt dadurch auch der Druck in der Verdampfereinrichtung 11, bis der Wärmeabgabe-Regler den Druck wieder durch Nachleiten von Wärmeträgermedium ausgleicht.

Der Vorteil aus dem Anspruch 8 liegt darin, daß die Nutzwärme aus dem Kocheradsorber während der Abkühl-und Sorptionsphase aus dem Kondensator an den Verbraucher abgegeben wird. Ein zusätzlicher Wärmetauscher beim Verbraucher entfällt ebenso wie eine separate Regelung für die Abgabe dieser Nutzwärme. Während der Sorptionsphase wird der Kocheradsorber vom Kondensator abgetrennt.

Da der Sorptionsdruck dabei niedriger als der Kondensatordruck ist, genügt nach der Lehre des Anspruchs 11 hierfür eine Rückschlagklappe. Sollte während der Desorptionsphase, bei ungeregeltem Desorptionswärmeeinsatz, der Druck im Kocheradsorber bei fehlender Nutzwärmeabgabe über den vom Wärmeabgabe-Regler geregelten Kondensatordruck ansteigen, ist ein Absperrorgan nach Anspruch 10 einzubauen, welches dann die Regelung der Nutzwärmeabgabe übernimmt.

Der Anspruch 12 beinhaltet eine Reihe weiterer Vorteile. Die Aufspaltung des Kocheradsorbers in mehrere Kocheradsorbereinheiten ermöglicht einen handlichen Transport leichter und kompakter Komponenten zum Aufstellungsort, eine bequeme Montage und eine flexible Anpassung an die örtlichen Raumverhältnisse.

Beschränkt man sich zusätzlich auf eine kleine Zahl baugleicher Standardgrößen, die über Vakuumleitungen beliebig verschaltbar sind, so kann jede gewünschte Speichergröße stufenweise aus serienmäßig vorgefertigten Kocheradsorbereinheiten erstellt werden. Aus Gewichtsgründen können die einzelnen Kocheradsorbereinheiten auch erst nach erfolgter Montage mit dem Sorptionsstoffpaar gefüllt werden.

Bei mehreren Kocheradsorbereinheiten können vorteilhafterweise je nach Bedarf beliebig viele Kocheradsorbereinheiten in allen Betriebszeitpunkten in Ruhestellung verharren oder nach Wunsch ganz (z. B. im Sommer) stillgelegt werden.

Die Lehre nach den Ansprüchen 16 - 20 erlaubt, als Adsorptionsstoffpaar vorteilhafterweise Zeolith/Wasser einzusetzen. Unter den Zeolithen eignen sich besonders diejenigen, welche über eine große Wasseraufnahmefähigkeit in Verbindung mit einer hohen thermischen Stabilität bei ausreichender Dampfdruckerniedrigung verfügen.

Handelsüblich sind Zeolithe in Pulver- und Granulatform. Optimale Leistungsziffern erreicht man mit Zeolithen ohne bzw. mit Bindemittelanteilen unter 18 Gew.-%. Die schlechte Wärmeleitfähigkeit im Zeolith kann erfindungsgemäß durch eine Verarbeitung des Zeoliths zu verfestigten Formen bei niedrigstem Bindemittelgehalt verbessert werden, wobei die Formen der Wärmetauscherflächen nachgebildet bzw. mit ihnen fest verbunden werden. Um den Druckabfall des ein- und ausströmenden Wasserdampfes so gering wie möglich zu halten, sind geeignete Strömungskanäle vorzusehen.

Im Gegensatz zu anderen festen Sorptionsstoffen quellen die Zeolithe durch die Adsorption nicht auf. Dadurch ist es möglich, die Wärmetauschereinrichtung nach Anspruch 20 fest in die Zeolithschicht einzubetten. Zeolith und Wärmetauschereinrichtung bilden so eine feste, stabile Einheit, die vakuumfeste Behälterwände überflüssig macht. Sowohl die Wärmetauscher als auch der Kocheradsorbermantel müssen den Zeolith lediglich vakuumdicht verschließen. Äußerer Überdruck, z. B. Luftdruck, kann somit die Wärmetauschereinrichtung fest auf den Zeolith pressen und den Wärmeübergang weiter verbessern.

Das Stoffpaar Zeolith/Wasser hat daneben noch den besonderen Vorteil, daß es völlig ungiftig und unbrennbar ist. Gegenüber Stahlblech zeigt es keine Korrosion. Sofern die Nutzwärmetemperatur unter 100 °C bleibt, befindet sich die gesamte Anlage im Unterdruckbereich. Kostenintensive Druckbehälter, Warneinrichtungen und Überdrucksicherungen sind deshalb überflüssig.

Zur Erhöhung der Leistungsziffer ist nach der Lehre aus Anspruch 21 während der Desorptionsphase der überhitzte Arbeitsmitteldampf aus dem Kocheradsorber, vor Passieren des Absperrorgans über nicht unmittelbar durch Primärenergie erhitzte, und deshalb noch kältere Sorptionsmittelpartien zu führen. Der Arbeitsmitteldampf kühlt sich hierbei ab, während das Sorptionsmittel entgast wird. Eine deutliche Erhöhung der Leistungsziffer ist die Folge.

0086383

Die Lehre nach dem Anspruch 22 hat den Vorteil, daß auf teure und großvolumige Dampfabsperreichrichtungen verzichtet werden kann. Die Flüssigkeitsventile am Brüdenraum können zudem noch kostengünstig als Rückschlagventil bzw. Schwimmerventil ausgebildet sein.

Der Soleflüssigkeits-Regler nach Anspruch 23 hat den besonderen Vorteil, daß die Einkopplung der Wärme aus der Wärmequelle völlig unabhängig von der Nutzwärmeentnahme erfolgt. Für die effektive Leistungsziffer ist nur die Wärmequellentemperatur am Ende der Sorptionsphase entscheidend, nicht die Temperaturen vorher. Starke Schwankungen der Wärmequellentemperatur haben somit auch keinen Einfluß auf die momentane Nutzwärmeleistung oder deren Temperatur. Ein plötzliches Ansteigen der Soleflüssigkeitstemperatur und des Arbeitsmitteldrucks, z. B. durch warmes Abwasser aus einem Kühlprozeß, läßt lediglich den Soleflüssigkeits-Regler ansprechen.

Die Splitbauweise der Verdampfereinrichtung nach Anspruch 22 und 25 in einen Brüdenraum, in dem die eigentliche Verdampfung stattfindet, und in mindestens einen wärmeaufnehmenden Wärmetauscher, hat den Vorteil kurzer Arbeitsmitteldampfwege bei uneingeschränkter Wärmequellenwahl. Mindestens ein Wärmetauscher kann immer am Ort der Wärmequelle installiert sein oder selbst die Funktion eines Wärmesammlers (Solarabsorber, Absorberdach, usw.) übernehmen. Wird Luft als Wärmequelle benutzt, muß sie auf diese Weise nicht über großvolumige und energiezehrende Strömungskanäle zum Verdampfer geführt werden.

Anspruch 27 ermöglicht, auch bei Wärmequellentemperaturen unter 0 °C in den Sorptionsapparat Wärme einzukoppeln.

Die Vorteile von Anspruch 28 sind zum einen ein extrem niedriger Dampfdruck des zugemischten Stoffes und zum anderen eine Metallkationengleichheit im Zeolith und in der Soleflüssigkeit. Falls die Soleflüssigkeit mit dem Zeolith einmal in Berührung kommen sollte, führt dies nicht zu einem schädlichen Ionenaustausch.

Die Lehre nach den Ansprüchen 29, 30 und 31 bringt den Vorteil, daß der Verdampfungsdruck im Brüdenraum bei Temperaturen über der Erstarrungsgrenze nicht unnötig durch zu hohe Gefrierschutzmittelkonzentrationen abgesenkt wird. Erfindungsgemäß wird ein Teil der Soleflüssigkeit in einem abtrennbaren Zweig des Solekreislaufs gespeichert, während flüssiges Arbeitsmittel aus dem Vorratstank durch eine Nachfülleinrichtung in den Solekreislauf nachgespeist wird. Auf diese Weise wird auch nach der Lehre des Anspruch 26 das im Brüdenraum verdampfte Arbeitsmittel nachgeregelt.

Eine zusätzliche Erhöhung der Leistungsziffer erreicht man durch die Lehre nach Anspruch 32, indem das flüssige Arbeitsmittel vor Eintritt in die Nachfülleinrichtung in einem Wärmetauscher z. B. für die Warmwassererzeugung abgekühlt wird.

Für die Leistungsziffer noch günstiger ist die Lehre nach dem Anspruch 33, wenn diese Wärmemenge im Brüdenraum auf den kalten Arbeitsmitteldampf übergeführt wird. Dieser bezieht dann seinen Anteil an spezifischer Wärme nicht unnötig aus der Nutzwärmemenge.

Nach der Lehre aus dem Anspruch 34 gelingt es, durch die erfindungsgemäße Kombination der Verdampfer- und Wärmetauschereinrichtung den im Brüdenraum erzeugten Arbeitsmitteldampf vor der Adsorption über Sorptionsmittelpartien zu leiten, die unter den gegebenen Bedingungen gesättigt sind, durch den kühleren Arbeitsmitteldampf jedoch abkühlen und weiter sorbieren. Es gelingt somit nicht nur die Wärmemenge zur Überhitzung des Arbeitsmitteldampfes energetisch günstig zu gewinnen, sondern auch den Wärmeübergang vom Sorptionsmittel zur Wärmetauschereinrichtung bei ohnehin kleiner werdenden Temperaturdifferenzen durch strömenden Dampf zu verbessern.

Die Lehre nach dem Anspruch 35 bringt den besonderen Vorteil mit sich, daß der gesamte Sorptionsapparat über eine Wasserstrahlpumpe abgepumpt werden kann. Störende Gase, die die Adsorption von Arbeitsmitteldampf im Sorptionsmittel hindern, werden durch den in den Kondensator strömenden Arbeitsmitteldampf mitgerissen und komprimiert. Der Kondensatordruck ist hier im Gegensatz zu Kälteapparaten, die die Abwärme bei tieferen Temperaturen und Drücken abgeben, ausreichend hoch, um die störenden Gase mit einer Wasserstrahlpumpe entfernen zu können.

Bei Überdruck im Kocheradsorber kann die Metallplatte aus Anspruch 36 als Überdruckventil wirken. Die Öffnung kann vorteilhafterweise auch zur Füllung und Inspektion des Kocheradsorbers benutzt werden.

Nach der Lehre aus Anspruch 38 ist die Nutzwärmeleistung dadurch von der Desorptionswärmeleistung unabhängig.

Falls keine Wärme aus der Wärmequelle verfügbar ist, wird nach Anspruch 39 die Nutzwärmeabgabe sichergestellt.

Im entgegengesetzten Fall, falls nach Anspruch 40 ein Überangebot an Wärme aus der Wärmequelle nutzbar wäre, wird diese Wärme erfindungsgemäß gleich auf Nutztemperaturniveau gespeichert.

Nach der Lehre aus Anspruch 41 wird die Leistungsziffer dadurch verbessert, daß das Wärmeträgermedium nicht unnötig durch Desorptionswärme verdampft wird.

Die Ansprüche 42, 57 und 58 führen alle zu einer größeren Entgasungsbreite und damit zu einer höheren Leistungsziffer. Indirekt wird damit auch die Speicherkapazität erhöht, da trotz identischem Desorptionswärmeaufwand die Nutzwärmemenge vergrößert wird.

Durch das Verfahren nach Anspruch 43 wird die Sorptionsmitteltemperatur bei gleichzeitiger Vergrößerung der Entgasungsbreite abgesenkt. Die Wärmeverluste durch die Isolation reduzieren sich erheblich. Eine dadurch mögliche Reduzierung der Isolationsstärke führt zu Investitionseinsparungen bei gleichzeitiger Verringerung des Raumbedarfs.

Das Verfahren nach Anspruch 44 hat durch ein Abkühlen des Sorptionsmittels zunächst den gleichen Vorteil wie Anspruch 43. Darüber hinaus kann aber das Sorptionsmittel bei gleichem Arbeitsmitteldampfdruck mehr Arbeitsmittel sorbieren und die Nutzwärmemenge dadurch erhöhen.

Das Verfahren nach Anspruch 45 unterscheidet sich vom vorhergehenden dadurch, daß hierbei die Sorptionsmitteltemperatur auch weit unter die Nutzwärmetemperatur absinken kann. Das bekannte Prinzip der Zweistufigkeit ist hierdurch auf einfachste Weise erreichbar. Die Wärme aus der Wärmequelle wird nach diesem Verfahren über zwei Temperaturstufen auf das Nutzwärmetemperaturniveau angehoben. Im Gegensatz zu den bekannten Verfahren wird hierdurch sogar die Speicherkapazität und die Leistungsziffer deutlich angehoben und nicht reduziert.

Die Lehre aus Anspruch 46 erweitert das Verfahren nach Anspruch 45 auf die allgemeine Mehrstufigkeit.

Anspruch 47 führt ebenfalls zu einer Erhöhung der Leistungsziffer, da die übertragene Wärmemenge einen Teil der Desorptionswärme darstellt.

Falls keine Wärme aus der Wärmequelle zur Verfügung steht, kann nach Anspruch 48 in Niedertarifzeiten elektrisch nachgeheizt werden. Die dadurch verfügbare Nutzwärmemenge erhöht sich hierbei zusätzlich nur die reine Sorptionswärmemenge.

Das Verfahren nach Anspruch 49 nutzt mit Vorteil ebenfalls diese reine Sorptionswärmemenge,ohne elektrisch nachzuheizen.

Für die Sorptionsapparate werden nach Anspruch 50 die Betriebskosten dadurch gesenkt, daß ähnlich dem Nachtstromtarif für (sonstige) Absatztäler wie z. B. Wochenendstrom niedrigere Preise möglich sind, da diese Apparate keinen Spitzenstrombedarf haben und die Grundlastkraftwerke auch am Wochenende gefahren werden können. Der Bau neuer Kraftwerke ist trotz erhöhten Stromabsatzes nicht notwendig. Steinkohlekraftwerke können auch am Wochenende betrieben werden und dadurch Öl in Ölheizungen substituieren.

Nach der Lehre aus dem Anspruch 51 ist es möglich,nach der Desorptionsphase, sofern nicht eine Kocheradsorbereinheit in Reserve gehalten wurde, früher mit der Sorptionsphase (Kühlprozeß) zu beginnen bzw. anfallende Wärme aus der Wärmequelle aufzunehmen. Nutzbare Abwärme geht somit nicht verloren.

Der besondere Vorteil nach Anspruch 52 liegt darin, daß Wärme aus der Wärmequelle völlig unabhängig von den Betriebszuständen des Sorptionsapparates in das System eingekoppelt werden kann. Alle Formen von Abwärme aus Industrie, Handwerk oder Haushalt sind ohne Zwischenspeicherung auch bei stark schwankenden Temperaturen nutzbar. Auch das Verbrennen von Abfällen kann hierdurch sinnvoll genutzt werden. Eine weitere bisher ungenutzte Wärmequelle stellt das Kraftfahrzeug dar. Die spezifische Wärme des heißen Motorblocks kann ohne große Zusatzinvestition über den Kühlwasserkreislauf auf den Sorptionsapparat übertragen werden. Das nach einer Fahrt abgestellte Fahrzeug wird hierzu über eine Schnellkupplung mit einem Wärmetauscher der Verdampfereinrichtung verbunden.

Nach der Lehre aus dem Anspruch 53 kann der Verbraucher Nutzwärme vom Kondensator beziehen oder Wärme an den Solekreislauf abgeben. Ein Heizkreislauf des Verbrauchers wird dadurch zum Kühlkreislauf. Im Sommer kann durch Umgehen des Kondensators mit den gleichen Heizkörpern, in denen im Winter geheizt wurde, gekühlt werden. Durch minimalste Zusatzinvestitionen kann ein konventionelles Heiznetz somit zur Klimaanlage werden. Die im Kondensator abzuführende Wärme kann dabei mit Vorteil z. B. zur Erwärmung des Schwimmbads dienen. Wird der Kondensator nicht umgangen und auf eine Kühlwirkung verzichtet, ergeben sich die gleichen Vorteile wie nach dem Verfahren aus Anspruch 49.

Nach der Lehre aus Anspruch 54 wird aus dem Brüdenraum durch dieses Verfahren ein Kondensator, da Arbeitsmittel aus dem Sorptionsmittel in die Soleflüssigkeit kondensiert und diese dabei erwärmt. Über den Solekreislauf kann also sowohl gekühlt als auch geheizt werden.

0086383

Die hierbei freiwerdende Wärme kann mit Vorteil nach der Lehre des Anspruchs 56 z. B. in einem Erdkollektor, Eisspeicher usw. gespeichert werden.

Nach dem Verfahren aus den Ansprüchen 59 und 60 ist es erstmals möglich, in einem Apparat einstufig einen Temperaturhub von über 100 °C zu erzielen. Dadurch ist es möglich, in einem Prozeßschritt sowohl Eis als auch kochendes Wasser gleichzeitig oder zeitlich versetzt bereitzustellen.

Mit großem Vorteil ist der Sorptionsapparat nach Anspruch 61 für die Verbrennung fester Stoffe (z. B. Holz, Stroh, Papier, Abfall, usw.) einzusetzen. Die Brennerbetriebszeit wird dadurch auf etwa ein Viertel der sonst üblichen Brennzeit reduziert. Ein Feststoffbrenner muß, da die Brenndauer nicht unterbrochen werden muß, nur einmal am Tag oder in der Woche nachgefüllt werden. Die übrige Zeitspanne übernimmt der Sorptionsapparat die Nutzwärmeversorgung. Bei nicht erhöhter Nutzwärmeabgabe kann der Brenner dabei die ca. 3-fache Leistung einbringen. Deshalb können auch bei kleinsten Heizleistungen größere Brenner zum Einsatz gelangen, die ohne Teillast- bzw. Taktbetrieb einen höheren Wirkungsgrad und weniger Schadstoffemissionen aufweisen. Ebenso können offene Kamine und Kachelöfen mit besonderem Vorteil mit einem Sorptionsapparat gekoppelt werden.

Die Verfahrens-Ansprüche (37 ff.) können grundsätzlich miteinander verknüpft werden, auch wenn dies im einzelnen bei diesen Ansprüchen selbst nicht angegeben ist.

Die ZUSAMMENFASSUNG wird ausdrücklich in die Offenbarung der Erfindung einbezogen.

Anhand der Zeichnung wird die Erfindung beispielsweise näher erläutert. Es zeigen:

Fig. 1a - c          ein Blockschaltbild der drei aufeinanderfolgenden Betriebsphasen des
                     Sorptionsapparats, und

Fig. 2               ein Ausführungsbeispiel des Sorp-
                     tionsapparats mit zwei Kocheradsor-
                     bereinheiten.

In F i g . 1 c ist der Grundaufbau des erfindungsgemäßen
Sorptionsapparates dargestellt.

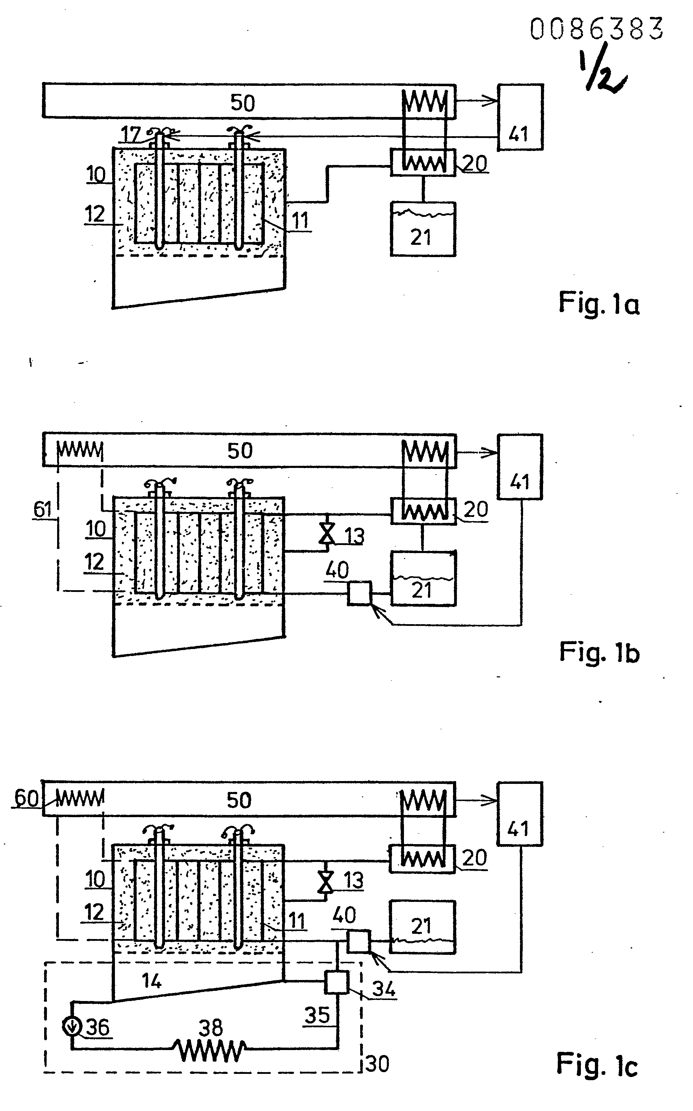

Ein an sich bekannter Kocheradsorber 10 enthält in seinem
oberen Teil ein Sorptionsmittel 12 und eine Wärmetauschereinrichtung 11. In seinem unteren Teil befindet sich erfindungsgemäß ein Brüdenraum 14, der zugleich Teil der Verdampfereinrichtung 30 ist. Die Verdampfereinrichtung 30 ist hier eine
für sich bekannte Bauart eines Umlaufverdampfers mit getrenntem Brüdenraum 14 und Wärmetauscher 38. Erfindungsgemäß erfolgt auch eine Nutzwärmeabgabe an einen Verbraucher 50. Ein
Wärmeabgabe-Regler 41 regelt, auf ein Eingriffsorgan 40 wirkend, von den Betriebszuständen des Kocheradsorbers 10 völlig
unabhängig, die Wärmeübergabe in einen Kondensator 20. Ein
zusätzliches Absperrorgan 13 erlaubt während der Sorptionsphase die Einkopplung von Wärme aus einer Wärmequelle über
den Wärmetauscher 38 in den Kocheradsorber 10. Eine weitere
Wärmeübergabestelle 60 beim Verbraucher 50 (in Fig. 1c in
Strichlinie gezeigt) kann somit entfallen. Zum Betrieb des
Sorptionsapparats sind ferner ein Vorratstank 21, eine Nachfülleinrichtung 34 und eine Solepumpe 36 vorgesehen.

Zur Vereinfachung der Darstellung sind in Fig. 1a - c,von der
Desorptionsphase 1a ausgehend, nur die zum Betrieb nötigen
bzw. die vorher betriebenen Komponenten dargestellt.

Der Betrieb des Sorptionsapparats setzt sich aus drei Phasen zusammen (F i g . 1).
Diese sind:

1. Die   D e s o r p t i o n s phase ( F i g . 1 a ):
Hier wird durch Zufuhr von Desorptionswärme bei hohen Temperaturen das Arbeitsmittel aus dem Sorptionsmittel 12 ausgetrieben und bei Nutzwärmetemperaturen im Kondensator 20 kondensiert. Das kondensierte Arbeitsmittel wird in dem Vorratstank 21 gespeichert. Bei Erreichen der Sorptionsmittelendtemperatur wird die Desorptionswärmezufuhr unterbrochen. Die Nutzwärme wird in dieser Phase über den Kondensator 20 an den Verbraucher 50 weitergeleitet.

2. Die   A b k ü h l phase ( F i g . 1 b ):
Über die Wärmetauschereinrichtung 11 wird die gespeicherte spezifische Wärme des Sorptionsmittels 12 an den Verbraucher 50 abgegeben. Dies geschieht entweder über einen Wärmeträgerkreislauf 61 (gestrichelt gezeichnet) oder erfindungsgemäß wiederum über den Kondensator 20. Der Wärmeabgabe-Regler 41 regelt über das Eingriffsorgan 40 den Verdampfungsdruck des Arbeitsmittels in der Wärmetauschereinrichtung 11. Das Sorptionsmittel 12 kühlt sich dabei ab und reduziert den Arbeitsmitteldampfdruck im Kocheradsorber 10 unter den zu Beginn herrschenden Kondensatordruck.

3. Die   S o r p t i o n s phase ( F i g . 1 c ):
Sobald der Arbeitsmitteldampfdruck im Kocheradsorber 10 unter den Arbeitsmitteldampfdruck in der Verdampfereinrichtung 30 gesunken ist, kann die Sorptionsphase beginnen.

Aus einem Solekreislauf 35 verdampft im Brüdenraum 14 Arbeitsmittel bei tiefen Temperaturen und strömt in das Sorptionsmittel 12, wo es bei höheren Temperaturen sorbiert wird und seine Sorptionswärme freisetzt.

Die abgekühlte Soleflüssigkeit wird im Wärmetauscher 38 aufgewärmt und erneut in den Brüdenraum 14 geleitet. Das im Brüdenraum 14 verdampfte Arbeitsmittel wird vorher in der Nachfülleinrichtung 34 aus dem Vorratstank 21 aufgefüllt. Die Sorptionswärme wird in dieser Phase auf die gleiche Weise wie in der Abkühlphase zum Verbraucher 50 geleitet.

F i g . 2 zeigt ergänzend zu Fig. 1c die Verschaltung mehrerer Kocheradsorbereinheiten.

Die Wärmetauschereinrichtungen 11, 11a sind in diesem Beispiel mit einer elektrischen Heizung 17, 17a ausgerüstet. Nur Sorptionsmittelpartien 16, 16a vor den Absperrorganen 13, 13a werden nicht beheizt.

Auf der Wärmeabgabeseite ist dem Vorratstank 21 der Kondensator 20 und eine Wasserstrahlpumpe 22 vorgeschaltet. Am unteren Ende des Vorratstanks 21 regelt der Wärmeabgabe-Regler 41 über das Eingriffsorgan 40 den Auslauf zu den Wärmetauschereinrichtungen 11, 11a.

Eine Arbeitsmittelleitung führt von hier zu der Verdampfereinrichtung 30, welche erfindungsgemäß einen Solekreislauf 35 mit einem absperrbaren Zweig 33, die Nachfülleinrichtung 34 und die Solepumpe 36 enthält. Mit den Brüdenräumen 14, 14a steht dieser Kreislauf über Flüssigkeitsventile 18, 18a und 19, 19a und einem Soleflüssigkeits-Regler 37 in Verbindung. Die beiden Kocheradsorbereinheiten 10 und 10a sind über die beiden Arbeitsmitteldampfleitungen 42 und 44 verbunden.

Das Sorptionsmittel 12 wird vorzugsweise während der Niedertarifzeiten durch die elektrische Heizung 17 erhitzt. Der dabei freiwerdende Arbeitsmitteldampf erhöht den Druck im Kocheradsorber 10 bis über den Kondensatordruck. Jetzt kann das Absperrorgan 13 die Dampfleitung zum Kondensator 20 freigeben.

Im Brüdenraum 14 ist während dieser Desorptionsphase nur Arbeitsmitteldampf, da die Flüssigkeitsventile 18 und 19 den Solekreislauf 35 unterbrechen. Das aus dem Sorptionsmittel 12 ausgetretene und im Kondensator 20 unter Wärmeabgabe an den Wärmeverbraucher 50 kondensierte Arbeitsmittel sammelt sich im Vorratstank 21. Die Wasserstrahlpumpe 22 entfernt erfindungsgemäß aus dem Kondensator 20 die nicht kondensierbaren Gase.

Am Ende der Desorptionsphase schließt das Absperrorgan 13 die Leitung zum Kondensator 20. Der Wärmeabgabe-Regler 41 läßt nun flüssiges Arbeitsmittel aus dem Vorratstank 21, vom Wärmeverbraucher 50 geregelt, in die Wärmetauschereinrichtung 11 einströmen. Das Arbeitsmittel verdampft hier, wobei das Sorptionsmittel 12 von unten nach oben fortschreitend abkühlt. Der Dampfdruck im Kocheradsorber 10 kann jetzt bei geschlossenem Absperrorgan 13 absinken. Sobald dieser Druck unter den Verdampfungsdruck der Soleflüssigkeit gesunken ist, geben die Flüssigkeitsventile 18 und 19 durch den Soleflüssigkeits-Regler 37 geregelt den Solekreislauf 35 durch den Brüdenraum 14 frei. Das Arbeitsmittel verdampft hier und speichert seine Sorptionswärme im Sorptionsmittel 12 auf höherer Temperatur bzw. gibt sie über die Wärmetauschereinrichtung 11 an den Kondensator 20 ab.

Die Nachfülleinrichtung 34 läßt bei Bedarf aus dem Vorratstank 21 das im Brüdenraum verdampfte Wasser in den Solekreislauf 35 nachströmen.

Um die Speicherkapazität weiter zu erhöhen, wird das Sorptionsmittel 12 unter die Nutztemperatur abgekühlt, indem der Kondensator 20 von der Wärmetauschereinrichtung 11 abgetrennt und der Arbeitsmitteldampf aus der Wärmetauschereinrichtung 11 über die absperrbare Dampfleitung 42 in den Kocheradsorber 10a geleitet wird. Bedingt durch den höheren Arbeitsmitteldampfdruck kann das Sorptionsmittel 12a im Kocheradsorber 10a weiter sorbieren und die freiwerdende Wärme über die Wärmetauschereinrichtung 11a erfindungsgemäß dem Wärmeverbraucher 50 zuleiten.

Besteht während der Sorptionsphase keine Möglichkeit, Wärme aus der Wärmequelle über die Verdampfereinrichtung 30 in das System einzukoppeln, wird dem Kocheradsorber 10 diese Wärmemenge aus der Wärmetauschereinrichtung 11 entnommen, indem ein Teilstrom des Arbeitsmitteldampfes über das Absperrorgan 13 in den Kocheradsorber 10 strömt und vom Sorptionsmittel 12 sorbiert wird.

0086383

PATENTANWALT\* & RECHTSANWALT
DIPL.-PHYS. DR. JUR. U. HEIDRICH

\*ZUGELASSEN BEIM EUROPÄISCHEN PATENTAMT
EUROPEAN PATENT ATTORNEY

Franziskanerstr. 30
D-8000 MÜNCHEN 80

Tel. (089) 448 50 40
Telex 5 213 710 epto d

31. Januar 1983
Sorptionsapparat

P a t e n t a n s p r ü c h e

1. Sorptionsapparat mit
   - mindestens einem Kocheradsorber (10), der besitzt:
     - ein Sorptionsmittel (12)
       - zum Auskochen und Sorbieren eines Arbeitsmittels
         und
     - eine Wärmetauschereinrichtung (11),
   - einem Kondensator (20),
   - einem Vorratstank (21), und
   - einer Stelleinrichtung für
     - Wärmeabgabe vom Kocheradsorber (10) zum Wärmever-
       braucher (50),
   d a d u r c h   g e k e n n z e i c h n e t ,
   - daß die Stelleinrichtung
     - ein Wärmeabgabe-Regler (41) ist,
       - der vom Wärmeverbraucher (50) betätigbar ist
   (Fig. 1c).


2. Sorptionsapparat nach Anspruch 1,
   dadurch gekennzeichnet,
   - daß der Wärmeabgabe-Regler (41)
     - die Zeitintervalle der Nutzwärmeabgabe regelt.

3. Sorptionsapparat nach Anspruch 1 oder 2, dadurch gekennzeichnet,

- daß der Wärmeabgabe-Regler (41)

  - die Temperatur der Nutzwärmeabgabe regelt.

4. Sorptionsapparat nach einem der vorhergehenden Ansprüche, dadurch gekennzeichnet,

- daß der Wärmeabgabe-Regler (41)

  - die Leistung der Nutzwärmeabgabe regelt.

5. Sorptionsapparat nach einem der vorhergehenden Ansprüche, dadurch gekennzeichnet,

- daß die Wärmetauschereinrichtung (11)

  - als Verdampfer für ein Wärmeträgermedium ausgebildet
    ist.

6. Sorptionsapparat nach Anspruch 5, dadurch gekennzeichnet,

- daß der Wärmeabgabe-Regler (41)

  - über ein Eingriffsorgan (40)

    - den Verdampfungsdruck des Wärmeträgermediums regelt.

7. Sorptionsapparat nach Anspruch 5 oder 6, dadurch gekennzeichnet,

- daß das Wärmeträgermedium

  - durch das Arbeitsmittel ersetzt ist.

8. Sorptionsapparat nach Anspruch 7,
   dadurch gekennzeichnet,
   - daß die Wärmetauschereinrichtung (11)
     - über eine Dampfleitung (39) mit
       - dem Kondensator (20) verbunden ist
   (Fig. 2).

9. Sorptionsapparat nach Anspruch 8,
   dadurch gekennzeichnet,
   - daß die Dampfleitung (39)
     - einen weiteren Wärmetauscher (43) enthält
   (Fig. 2).

10. Sorptionsapparat nach Anspruch 8,
    dadurch gekennzeichnet,
    - daß in der Dampfleitung zwischen Kocheradsorber (10)
      und Kondensator (20)
      - ein Absperrorgan (13) angeordnet ist
    (Fig. 2).

11. Sorptionsapparat nach Anspruch 10,
    dadurch gekennzeichnet,
    - daß das Absperrorgan (13)
      eine Rückschlagklappe ist.

- 4 -

0086383

12. Sorptionsapparat nach einem der vorhergehenden Ansprüche,
dadurch gekennzeichnet,
- daß der Kocheradsorber
  - aus mehreren funktionsgleichen, gesondert betreibbaren Kocheradsorbereinheiten (10, 10a) besteht
(Fig. 2).

13. Sorptionsapparat nach Anspruch 12,
dadurch gekennzeichnet,
- daß die Kocheradsorbereinheiten (10, 10a)
  - untereinander über eine absperrbare Arbeitsmitteldampfleitung (44) verbunden sind
(Fig. 2).

14. Sorptionsapparat nach Anspruch 12,
dadurch gekennzeichnet,
- daß die Wärmetauschereinrichtung (11)
  - über eine absperrbare Dampfleitung (42) mit
  - einer Kocheradsorbereinheit (10a) verbunden ist
(Fig. 2).

15. Sorptionsapparat nach Anspruch 12,
dadurch gekennzeichnet,
- daß der Wärmetauscher (43)
  - die Wärmetauschereinrichtung (11a)
    - eines weiteren Kocheradsorbers (10a) ist.

16. Sorptionsapparat nach einem der vorhergehenden Ansprüche,
    dadurch gekennzeichnet,
    - daß das Sorptionsmittel (12)
      - ein Zeolith des Typs Na-Y ist.

17. Sorptionsapparat nach einem der vorhergehenden Ansprüche,
    dadurch gekennzeichnet,
    - daß das Sorptionsmittel (12)
      - mindestens teilweise ein mit Magnesiumionen ausgetauschter Zeolith des Typs Na-A ist.

18. Sorptionsapparat nach Anspruch 16 oder 17,
    dadurch gekennzeichnet,
    - daß der Zeolith enthält:
      - weniger als ca. 18 Gew.-%
        - Bindemittel oder
        - durch Umwandlung entstandene Nebenprodukte.

19. Sorptionsapparat nach Anspruch 16, 17 oder 18,
    dadurch gekennzeichnet,
    - daß der Zeolith
      - zu einem festen Körper geformt ist,
      - mit Strömungskanälen durchzogen und/oder
      - in seiner Oberfläche der Wärmetauschereinrichtung (11)
        geometrisch angepaßt ist.

20. Sorptionsapparat nach einem der Ansprüche 16 - 19,
    dadurch gekennzeichnet,
    - daß die Wärmetauschereinrichtung (11) und/oder die Kocheradsorberhülle
      - durch äußeren Überdruck auf den Zeolith gepreßt sind.

21. Sorptionsapparat nach einem der vorhergehenden Ansprüche, dadurch gekennzeichnet,

- daß die Wärmetauschereinrichtung (11) und die Kocheradsorberhülle

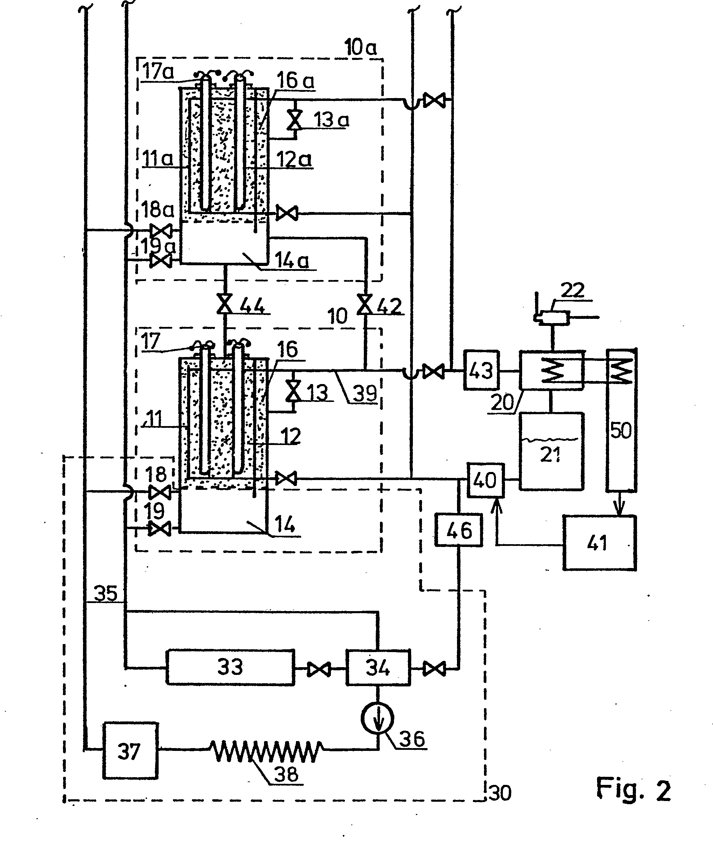

  - derart geformt sind, daß während des Austreibens der überhitzte Arbeitsmitteldampf vor Durchströmen des Absperrorgans (13) über nicht unmittelbar durch Desorptionswärme beheizte Sorptionsmittelpartien (16) strömt (Fig. 2).

22. Sorptionsapparat, insbesondere nach einem der vorhergehenden Ansprüche, mit

- mindestens einem Kocheradsorber (10) - zum Austreiben und Sorbieren eines Arbeitsmittels aus bzw. in einem Sorptionsmittel (12),

- einem Kondensator (20),

- einem Vorratstank (21) und

- einer Verdampfereinrichtung (30) - mit einem Brüdenraum (14),

d a d u r c h   g e k e n n z e i c h n e t ,

- daß der Brüdenraum (14)

  - Teil des Kocheradsorbers (10) ist und

  - über Flüssigkeitsventile (18, 19)

    - von der Verdampfereinrichtung (30) abtrennbar und

    - von Soleflüssigkeit entleerbar ist (Fig. 1c).

23. Sorptionsapparat nach Anspruch 22, gekennzeichnet durch

- einen Soleflüssigkeits-Regler (37) - für den Durchfluß der Soleflüssigkeit durch den Brüdenraum (14) (Fig. 2).

24. Sorptionsapparat nach Anspruch 23,
dadurch gekennzeichnet,
- daß der Soleflüssigkeits-Regler (37)
  - den Arbeitsmitteldampfdruck im Solekreislauf (35) $P_A$
    mit dem Arbeitsmitteldampfdruck im Kocheradsorber
    (10) $P_S$ vergleicht.

25. Sorptionsapparat nach Anspruch 22,
gekennzeichnet durch
- mindestens einen Wärmetauscher (38)
  - im Solekreislauf (35)
(Fig. 2).

26. Sorptionsapparat nach Anspruch 22,
gekennzeichnet durch
- eine Nachfülleinrichtung (34) für flüssiges Arbeitsmittel
  - im Solekreislauf (35)
(Fig. 2).

27. Sorptionsapparat nach Anspruch 22,
dadurch gekennzeichnet,
- daß die Soleflüssigkeit
  - eine Mischung
    - aus flüssigem Arbeitsmittel und
    - einem den Erstarrungspunkt erniedrigenden Stoff
      ist.

28. Sorptionsapparat nach Anspruch 27, dadurch gekennzeichnet,

    - daß die Mischung

      - ein Salz oder eine Lauge enthält,

        - dessen (deren) Kation mit dem Zeolithkation identisch ist.

29. Sorptionsapparat nach Anspruch 27, gekennzeichnet durch

    - einen absperrbaren Zweig (33) im Solekreislauf (35), - in dem mindestens ein Teil der Soleflüssigkeit
        speicherbar ist (Fig. 2).

30. Sorptionsapparat nach Anspruch 29, dadurch gekennzeichnet,

    - daß der absperrbare Zweig (33)

      - die Arbeitsmittelkonzentration in der Soleflüssigkeit regelt.

31. Sorptionsapparat nach Anspruch 29, dadurch gekennzeichnet,

    - daß der absperrbare Zweig (33)

      - bei Temperaturen über dem Erstarrungspunkt des reinen Arbeitsmittels mit Soleflüssigkeit maximal gefüllt und

      - bei der tiefsten Soleflüssigkeits-Temperatur weitestgehend entleert ist.

32. Sorptionsapparat nach Anspruch 26, gekennzeichnet durch

- mindestens einen Wärmetauscher (46)

  - in der Arbeitsmittelleitung zwischen Vorratstank (21) und Nachfülleinrichtung (34) (Fig. 2).

33. Sorptionsapparat nach Anspruch 32, dadurch gekennzeichnet,

- daß der mindestens eine Wärmetauscher (46)

  - im Dampfraum des Brüdenraums (14) angeordnet ist.

34. Sorptionsapparat nach einem der vorhergehenden Ansprüche, dadurch gekennzeichnet,

- daß die Wärmetauschereinrichtung (11) und der Brüdenraum (14) so geformt und angeordnet sind, daß

  - sich der Kocheradsorber (10) zuerst im Bereich des Brüdenraums (14) abkühlt und/oder

  - der im Brüdenraum (14) erzeugte Arbeitsmitteldampf zuerst über bereits gekühlte Sorptionsmittelpartien strömt.

35. Sorptionsapparat nach einem der vorhergehenden Ansprüche, gekennzeichnet durch

- eine Wasserstrahlpumpe (22),

  - die an den Kondensator (20) angeschlossen ist (Fig. 2).

36. Sorptionsapparat nach Anspruch 1, gekennzeichnet durch

- eine Metallplatte,

    - die durch den äußeren Luftdruck vakuumdicht an einer Öffnung in der Kocheradsorberhülle anliegt.

37. Verfahren zum Betrieb des Sorptionsapparates nach Anspruch 1 oder 22, mit

- einer Desorptionsphase,

- einer Abkühlphase und

- einer Sorptionsphase,

d a d u r c h    g e k e n n z e i c h n e t ,

- daß während der Desorptionsphase - Nutzwärme dem Kondensator (20) entnommen wird.

38. Verfahren nach Anspruch 37, dadurch gekennzeichnet,

- daß während der Desorptionsphase

    - Nutzwärme aus der spezifischen Wärme des Sorptionsmittels (12) durch die Wärmetauschereinrichtung (11) übertragen wird.

39. Verfahren zum Betrieb des Sorptionsapparats nach Anspruch 1,

dadurch gekennzeichnet,

- daß während der Sorptionsphase

    - Nutzwärme aus der spezifischen Wärme des Sorptionsmittels (12) durch die Wärmetauschereinrichtung (11) übertragen wird.

- 11 -

0086383

40. Verfahren zum Betrieb des Sorptionsapparats nach Anspruch 1 oder 22,
dadurch gekennzeichnet,
- daß Wärme aus der Wärmequelle
  - als spezifische Wärme des Sorptionsmittels (12) gespeichert wird.

41. Verfahren zum Betrieb des Sorptionsapparats nach Anspruch 6,
dadurch gekennzeichnet,
- daß vor oder während der Desorptionsphase
  - der Wärmeabgabe-Regler (41) das Wärmeträgermedium aus der Wärmetauschereinrichtung (11) zurückströmen läßt.

42. Verfahren zum Betrieb des Sorptionsapparats nach Anspruch 13,
dadurch gekennzeichnet,
- daß am Ende der Desorptionsphase
  - bei geschlossenem Absperrorgan (13) Arbeitsmitteldampf aus dem Kocheradsorber (10) über die absperrbare Arbeitsmitteldampfleitung (44) in den Kocheradsorber (10a) strömt.

43. Verfahren nach Anspruch 42,
dadurch gekennzeichnet,
- daß keine Desorptionswärme zugeführt wird.

0086383

44. Verfahren zum Betrieb des Sorptionsapparats nach Anspruch 14,

dadurch gekennzeichnet,

- daß der Arbeitsmitteldampf

  - in der Wärmetauschereinrichtung (11) erzeugt wird,
  - über die absperrbare Dampfleitung (42) in den Kocheradsorber (10a) strömt und
  - dort sorbiert wird.

45. Verfahren nach Anspruch 44, dadurch gekennzeichnet,

- daß die Dampfleitung von der Wärmetauschereinrichtung (11) zum Kondensator (20)
  - abgesperrt ist.

46. Verfahren nach Anspruch 45, dadurch gekennzeichnet,

- daß die Wärmetauschereinrichtung (11a)
  - vom Kondensator (20) abgetrennt ist und der Arbeitsmitteldampf von ihr in eine weitere Kocherabsorbereinheit strömt und dort sorbiert wird.

47. Verfahren zum Betrieb des Sorptionsapparats nach Anspruch 15,

dadurch gekennzeichnet,

- daß der aus der Wärmetauschereinrichtung (11) strömende Arbeitsmitteldampf
  - im überhitzten Zustand in die Wärmetauschereinrichtung (11a) eingeleitet wird.

48. Verfahren zum Betrieb des Sorptionsapparats nach Anspruch 22,

dadurch gekennzeichnet,

- daß während der Sorptionsphase

   - der Solekreislauf (35)

      - durch Niedertarifstrom beheizt wird.

49. Verfahren zum Betrieb des Sorptionsapparats nach Anspruch 7,

dadurch gekennzeichnet,

- daß Arbeitsmitteldampf

   - aus der Wärmetauschereinrichtung (11) durch das offene Absperrorgan (13) in den Kocheradsorber (10) strömt und vom Sorptionsmittel (12) sorbiert wird.

50. Verfahren zum Betrieb des Sorptionsapparats nach Anspruch 1,

dadurch gekennzeichnet,

- daß die Desorptionsphase

   - in einem Absatztal der EVU's liegt.

51. Verfahren zum Betrieb des Sorptionsapparats nach Anspruch 12,

dadurch gekennzeichnet,

- daß die Kocherabsorbereinheiten (10, 10a)

   - zeitlich nacheinander abgekühlt werden.

52. Verfahren zum Betrieb des Sorptionsapparats nach Anspruch 24,

dadurch gekennzeichnet,

- daß der Soleflüssigkeits-Regler (37)

  - bei $P_S < P_A$

    - die Soleflüssigkeit durch den Brüdenraum (14) leitet.

53. Verfahren nach Anspruch 52, dadurch gekennzeichnet,

- daß während der Sorptionsphase

  - an den Solekreislauf (35)

    - vom Verbraucher (50) Wärme abgegeben wird.

54. Verfahren zum Betrieb des Sorptionsapparats nach Anspruch 24,

dadurch gekennzeichnet,

- daß der Soleflüssigkeits-Regler (37)

  - bei $P_S > P_A$

    - die Soleflüssigkeit durch den Brüdenraum (14) leitet.

55. Verfahren nach Anspruch 54, dadurch gekennzeichnet,

- daß mit der von der Soleflüssigkeit im Brüdenraum (14) aufgenommenen Wärme

  - mindestens ein Wärmetauscher (38) enteist wird.

0086383

56. Verfahren nach Anspruch 54, dadurch gekennzeichnet,

    - daß die von der Soleflüssigkeit im Brüdenraum (14) aufgenommene Wärme

      - außerhalb der Verdampfereinrichtung (30) gespeichert
        wird.


57. Verfahren nach Anspruch 54, dadurch gekennzeichnet,

    - daß am Ende der Desorptionsphase oder zu Beginn der
      Abkühlphase

      - das Arbeitsmittel von der Soleflüssigkeit aufgenommen wird.


58. Verfahren nach Anspruch 54, dadurch gekennzeichnet,

    - daß die aus dem Kocheradsorber (10) entnommene Wärmemenge

      - über die Verdampfereinrichtung (30) in den Kocheradsorber (10a) übertragen wird.


59. Verfahren nach einem der vorhergehenden Ansprüche, dadurch gekennzeichnet,

    - daß während der Sorptionsphase

      - die Nutzwärmetemperatur über 100 °C liegt.


60. Verfahren nach Anspruch 59, dadurch gekennzeichnet,

    - daß die Verdampfungstemperatur im Brüdenraum (14)

      - unter 0 °C liegt.

0086383

61. Verfahren zum Betrieb des Sorptionsapparats nach Anspruch 1,

dadurch gekennzeichnet,

- daß die Desorptionswärme

  - aus der Verbrennung von festen, flüssigen oder gasförmigen Stoffen stammt.

0086383

1/2

Fig. 1a

Fig. 1b

Fig. 1c

Fig. 2